# EUROPEAN PATENT APPLICATION

(11) **EP 3 503 347 A1**
(43) Date of publication of application: **26.06.2019**
(21) Application number: 18181665.3
(22) Date of filing: 04.07.2018
(51) Int. Cl.: H02J 7/35, H02J 7/00, H02J 7/02

(54) **DETACHABLE SOLAR CHARGING DEVICE**

(30) Priority: 21.12.2017 CN 201721812138 U
(71) Applicant: Miasole Photovoltaic Technology Co., Ltd., Beijing (CN)
(72) Inventor: BU, Mingli, BEIJING (CN)
(74) Representative: Cabinet Beau de Loménie

(57) **Abstract**

A detachable solar charging device includes a solar electrical-generating assembly (1) and an energy storage unit (2) detachably connected to each other, and each of the solar electrical-generating assembly (1) and the energy storage unit (2) being provided with an output port (4); and a display unit (3) provided on the energy storage unit (2) and connected to the energy storage unit (2).

## Description

### TECHNICAL FIELD

This disclosure relates to a solar charging field, in particular to a detachable solar charging device.

### BACKGROUND

Solar electrical-generating products at present are generally classified into two types without energy storage and with energy storage. A product without energy storage in use is directly coupled to a solar electrical-generating unit by a charging load, and is placed under the sunlight to be charged. A solar electrical-generating product with solar energy, based on the product without energy storage, is provided with a chargeable/dischargeable energy storage device, such as lithium battery, Ni-MH, Ni-Cd in a terminal box, in use is placed under the sunlight, to directly charge the load and also charge an energy storage battery in the terminal box, in the absence of sunlight, the energy storage battery inside the terminal box can discharge power to charge the load.

At present, the solar electrical-charging product with energy storage has energy storage portions that all are fixed in the interior of the terminal box and must be used together with the solar electrical-generating assembly. With such configuration, it is more suitable for outdoor activities, but is rarely used by the urban users because of the large size of the solar electrical-generating assembly and inconvenient carrying, and thereby reducing frequency of using the internal energy storage battery and causing a great waste of resources.

### SUMMARY

An object of the present disclosure is to provide a detachable solar charging device to solve the problems in the prior art, i.e., the solar electrical-generating assembly and the energy storage unit may be separately to be individually used.

The present disclosure provides a detachable solar charging device, which includes a solar electrical-generating assembly and an energy storage unit detachably connected to each other, and each of the solar electrical-generating assembly and the energy storage unit being provided with an output port; and a display unit provided on the energy storage unit and connected to the energy storage unit.

In an embodiment, the detachable solar charging device further includes a winder that is integrated in an interior of the energy storage unit; the winder is wound with a connecting wire; both ends of the connecting wire are used to detachably connect with the solar electrical-generating assembly and the energy storage unit, respectively.

In an embodiment, the solar electrical-generating assembly is wirelessly connected to the energy storage unit.

In an embodiment, the detachable solar charging device further includes:
a first temperature inductor that is attached to the energy storage unit; and
a second temperature inductor that is used for detecting an environment temperature;
both the first temperature inductor and the second temperature inductor are connected to the display unit.

In an embodiment, the solar electrical-generating assembly includes a plurality of solar cell sheets that are connected in series and folded one to another.

In an embodiment, the energy storage unit is provided with a groove for accommodating the folded solar cell sheets, and the groove is provided with a cell cover.

In an embodiment, the solar electrical-generating assembly has two ends that are bent, such that a card slot for accommodating the energy storage unit is formed between the two ends of the solar electrical-generating assembly.

In an embodiment, the energy storage unit includes a plurality of energy storage cell modules that are detachably connected to one another.

In an embodiment, the energy storage unit is provided with a rail socket, the solar electrical-generating assembly is provided with a convex plug, and the convex plug is used to match with the rail socket.

In an embodiment, the detachable solar charging device further includes a controller integrated in the interior of the energy storage unit.

According to another aspect of the present disclosure, a detachable solar charging device includes a solar electrical-generating assembly that is provided with an output port and an electrical connection interface; and an energy storage unit that is provided with an output port and an electrical connection joint. Wherein the electrical connection joint is detachably connected with the electrical connection interface.

According to another aspect of the present disclosure, a detachable solar charging device includes a solar electrical-generating assembly that is provided with an output port; and an energy storage unit that is provided with an output port, and is selectively and electrically connected with the solar electrical-generating assembly. Wherein a physical connection between the solar electrical-generating assembly and the energy storage unit is a detachable connection.

According to one implementation of the present disclosure, the physical connection between the solar electrical-generating assembly and the energy storage unit is a plug-in connection, a snap-fit connection, or a magnetic connection, and an electrical connection between the solar electrical-generating assembly and the energy storage unit is a wire connection or a wireless connection.

According to the detachable solar charging device as provided in the present disclosure, the solar electrical-generating assembly is detachably connected with the energy storage unit, and both solar electrical-generating assembly and the energy storage unit are provided with an output port, that is, each of the solar electrical-generating assembly and the energy storage unit may be separately connected to the load, so that the user can flexibly select the solar electrical-generating assembly or the energy storage unit according to actual requirements, which is convenient to carry and thereby avoiding waste of resources. Moreover, the present disclosure is provided with the display unit that displays useful information, such as the remaining amount of the electricity, remaining time, etc., according to the actual requirements, and can be used conveniently and practically. In addition, the solar electrical-generating assembly and the energy storage unit themselves have various forms and different connection ways therebetween to improve convenience of the use.

### BRIEF DESCRIPTION OF THE DRAWINGS

FIG. 1 is a schematic structural view of a detachable solar charging device according to an embodiment of the present disclosure; and
FIG. 2 is a schematic structural view of a detachable solar charging device according to another embodiment of the present disclosure.
FIG. 3 is a schematic structural view of a detachable solar charging device according to another embodiment of the present disclosure.

### DETAILED DESCRIPTION

Hereinafter, the embodiments of the present disclosure will be described in detail. Examples of the embodiments are shown in the drawings, wherein the same or similar reference numerals represent the same or similar elements or elements having the same or similar functions throughout the specification. The embodiments described below with reference to the drawings are exemplary, merely used to interpret the present disclosure, but cannot be consumed as limiting the present disclosure.

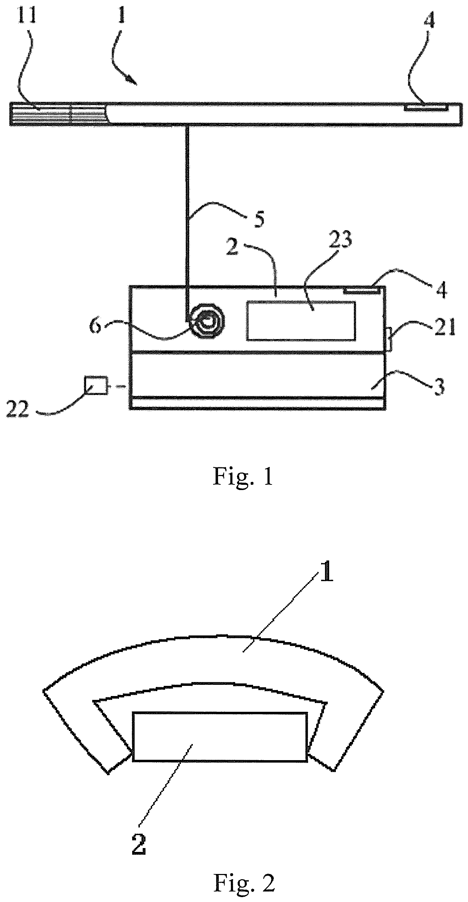

As shown in FIG. 1, the embodiment of the present disclosure provides a detachable solar charging device. The detachable solar charging device includes a solar electrical-generating assembly 1 and an energy storage unit 2 which are detachably connected to each other, and each of the solar electrical-generating assembly 1 and the energy storage unit 2 being provided with an output port 4; and a display unit 3 provided on the energy storage unit 2, the display unit 3 being connected to the energy storage unit 2. Wherein solar electrical-generating assembly 1 may cover crystalline silicon, CIGS GaAS, CdTe, dye sensitization, photo thermal and other forms. The energy storage unit 2 may be lithium battery, nickel hydrogen, nickel cadmium, super capacitor and other energy storage devices. The display unit 3 may be a display screen which may display remaining amount of electricity, charging time, temperature, etc., and can be flexibly set according to the actual situations.

As shown in FIG. 1, In an embodiment,, the detachable solar charging device further includes a winder 6 integrated in the interior of the energy storage unit 2. The winder 6 is wound with a connecting wire 5. Both ends of the connecting wire 5 are used to detachably connect with the solar electrical-generating assembly 1 and the energy storage unit 2, respectively.

In an embodiment, the solar electrical-generating assembly 1 and the energy storage unit 2 are wirelessly connected. Wirelessly charging can be achieved by means of an inductive coupling technology.

In an embodiment, the detachable solar charging device further includes a first temperature inductor 21 that is configured to be attached to the energy storage unit 2; and a second temperature inductor 22 used for detecting an environment temperature. Both the first temperature inductor 21 and the second temperature inductor 22 are connected to the display unit 3. Wherein the first temperature inductor 21 is used for detecting a surface temperature of the energy storage unit 2 to avoid danger due to too high temperature thereof, whereas the second temperature inductor 22 generally not in contact with the energy storage unit 2 is used for detecting the environment temperature to realize intuitive comparison with the temperature of the energy storage unit 2, and such two temperatures are displayed via the display unit 3, and thereby being compared manually or by a controller, so as to prevent generation of danger.

In an embodiment, the solar electrical-generating assembly 1 includes a plurality of solar cell sheets 11 which are connected in series and may be folded one to another. In an embodiment, the energy storage unit 2 is provided with a groove 23 for accommodating the folded solar cell sheets 11. The groove 23 is provided with a cell cover.

In this embodiment, the solar cell sheets 11, when used, are unfolded to fully absorb sunlight, and after used, are folded to decrease the area and placed into the groove 23 on the energy storage unit 2, and are enclosed by the cell cover, which is used conveniently and safely.

As shown in FIG. 2, In an embodiment, in another embodiment of the present disclosure, the solar electrical-generating assembly 1 has two ends that may be bent, such that a card slot for accommodating the energy storage unit 2 is formed between the two ends of the solar electrical-generating assembly 1. That is, the solar electrical-generating assembly 1 and the energy storage unit 2 are an embraced structure.

In an embodiment, the energy storage unit 2 includes a plurality of energy storage cell modules that are detachably connected to one another. Number of energy storage cell modules may be selected according to actual needs, which is used conveniently and flexibly.

In an embodiment, the energy storage unit 2 is provided with a rail socket. The solar electrical-generating assembly 1 is provided with a convex plug. The convex plug is used to match with the rail socket.

In an embodiment, the detachable solar charging device further includes a controller integrated in the interior of the energy storage unit 2.

As for the detachable solar charging device as provided in the present disclosure, the solar electrical-generating assembly 1 is detachably connected with the energy storage unit 2, and both solar electrical-generating assembly 1 and the energy storage unit 2 are provided with the output port 4, that is, each of the solar electrical-generating assembly 1 and the energy storage unit 2 may be separately connected to the load, so that the user can flexibly select the solar electrical-generating assembly 1 or the energy storage unit 2 according to actual requirements, which is convenient to carry and thereby avoiding waste of resources. Moreover, the present disclosure provides the display unit 3 that displays useful information, such as the remaining amount of the electricity, remaining time, etc., according to the actual requirements, and can be used conveniently and practically. In addition, the solar electrical-generating assembly 1 and the energy storage unit 2 themselves have various forms and different connection ways therebetween to improve convenience of the use.

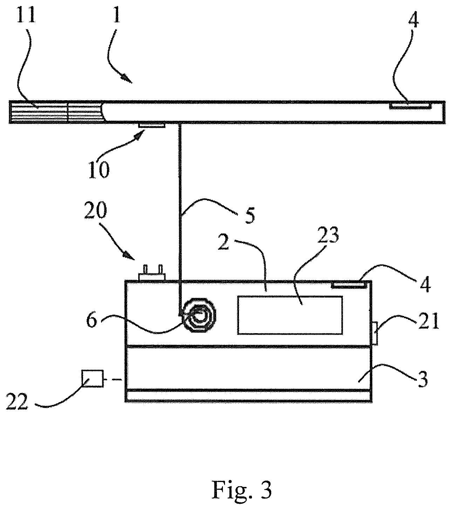

As shown in FIG. 3, another embodiment of the present disclosure provides a detachable solar charging device. The detachable solar charging device includes a solar electrical-generating assembly 1 and an energy storage unit 2.

An electrical connection interface 10 is provided on the solar electrical-generating assembly 1, and an electrical connection joint 20 is provided on the energy storage unit 2. Connection between the electrical connection interface 10 and the electrical connection joint 20 is a detachable connection, for example, a plug-in connection. In the state that the electrical connection interface 10 and the electrical connection joint 20 are connected with each other, the solar electrical-generating assembly 1 and the energy storage unit 2 are physically connected and also electrically connected, at this time, the solar electrical-generating assembly 1 may be used to charge the energy storage unit 2.

Both solar electrical-generating assembly 1 and the energy storage unit 2 are provided with the output port 4, such that each of the solar electrical-generating assembly 1 and the energy storage unit 2 may be separately connected to the load, such as a mobile phone, in this way, the user can flexibly select the solar electrical-generating assembly 1 or the energy storage unit 2 according to actual requirements, which is convenient to carry and thereby avoiding waste of resources.

The solar electrical-generating assembly 1 may cover crystalline silicon, CIGS GaAS, CdTe, dye sensitization, photothermal and other forms. The energy storage unit 2 may cover lithium battery, nickel hydrogen, nickel cadmium, super capacitor and other energy storage devices. According to one embodiment of the present disclosure, the solar electrical-generating assembly 1 includes a plurality of solar cell sheets 11 which are connected in series and may be folded one to another.

The energy storage unit 2 includes a plurality of energy storage cell modules that are detachably connected to one another. Number of energy storage cell modules may be selected according to actual needs, which is used conveniently and flexibly.

In this embodiment, the detachable solar charging device further includes a display unit 3. The display unit 3 may be a display screen and provided on the energy storage unit 2, and connected to the energy storage unit 2. The display unit 3 may display remaining amount of electricity, charging time, temperature, etc., and can be flexibly set according to the actual situations.

According to one implementation of the present disclosure, the detachable solar charging device further includes a first temperature inductor 21 and a second temperature inductor 22. The first temperature inductor 21 is attached to the energy storage unit 2, for detecting the surface temperature of the energy storage unit 2 to prevent causing danger due to too high temperature. The second temperature inductor 22 is generally not in contact with the energy storage unit 2, for detecting the environment temperature to realize intuitive comparison with the temperature of the energy storage unit 2. Both the first temperature inductor 21 and the second temperature inductor 22 are connected with the display unit 3. The temperature values of the first temperature inductor 21 and the second temperature inductor 22 are displayed via the display unit 3, and are compared manually or by a controller, to prevent danger.

According to one implementation of the present disclosure, the energy storage unit 2 is provided with a groove 23 for accommodating the folded solar cell sheets 11. The groove 23 is provided with a cell cover. The solar cell sheets 11, when used, are unfolded to fully absorb sunlight, and after used, are folded to decrease the area and placed into the groove 23 on the energy storage unit 2, and are enclosed by the cell cover, which is used conveniently and safely.

As shown in FIG. 2, according to another embodiment of the present disclosure, the solar electrical-generating assembly 1 has two ends that may be bent, such that a card slot for accommodating the energy storage unit 2 is formed between the two ends of the solar electrical-generating assembly 1. That is, the solar electrical-generating assembly 1 and the energy storage unit 2 are an embraced structure.

According to one implementation of the present disclosure, the detachable solar charging device further includes a controller integrated in the interior of the energy storage unit 2.

Another embodiment of the present disclosure provides a detachable solar charging device. The detachable solar charging device includes a solar electrical-generating assembly 1 and an energy storage unit 2. The energy storage unit 2 is selectively and electrically connected with the solar electrical-generating assembly 1. A physical connection between the solar electrical-generating assembly 1 and the energy storage unit 2 is a detachable connection.

Wherein the physical connection between the solar electrical-generating assembly and the energy storage unit may be a plug-in, snap-fit, or magnetic connection. And the electrical connection between the solar electrical-generating assembly and the energy storage unit is a wire connection or a wireless connection.

In this implementation, the same connection structure may be used to realize the electrical connection and the physical connection between the solar electrical-generating assembly 1 and the energy storage unit 2 simultaneously, or two different connection structures may be used to realize the electrical connection and the physical connection therebetween, respectively.

The solar electrical-generating assembly 1, the energy storage unit 2, and the display unit 3 probably contained in this implementation may be as same as those of the aforementioned implementations, and herein will not be described any more.

The above-described embodiments as shown in the figures depict the configuration, features and effects of the present disclosure. The aforesaid embodiments are only the preferred embodiments of the present disclosure, and implementation scope is not limited depending on the drawings of the present disclosure, and thereby all changes and modifications made according to the concept of the present disclosure are equivalent embodiments, which do not go beyond the scope of the specification and shown in the drawings, and all should fall within the protection scope of the present disclosure.

## Claims

1. A detachable solar charging device, wherein the detachable solar charging device comprises:
a solar electrical-generating assembly (1) and an energy storage unit (2) which are detachably connected to each other, and each of the solar electrical-generating assembly (1) and the energy storage unit (2) being provided with an output port (4); and
a display unit (3) that is provided on the energy storage unit (2) and connected to the energy storage unit (2).

2. The detachable solar charging device according to claim 1, wherein the detachable solar charging device further comprises a winder (6) which is integrated in an interior of the energy storage unit (2);
the winder (6) is wound with a connecting wire (5);
both ends of the connecting wire (5) are detachably connected with the solar electrical-generating assembly (1) and the energy storage unit (2), respectively.

3. The detachable solar charging device according to claim 1, wherein the solar electrical-generating assembly (1) is wirelessly connected to the energy storage unit (2).

4. The detachable solar charging device according to anyone of claims 1 to 3, wherein the detachable solar charging device further comprises:
a first temperature inductor (21) attached to the energy storage unit (2); and
a second temperature inductor (22) configured to detect an environment temperature;
both the first temperature inductor (21) and the second temperature inductor (22) are connected to the display unit (3).

5. The detachable solar charging device according to anyone of claims 1 to 4, wherein the solar electrical-generating assembly (1) comprises a plurality of solar cell sheet (11) that are connected in series and folded one to another.

6. The detachable solar charging device according to claim 5, wherein the energy storage unit (2) is provided with a second temperature inductor (23) for accommodating a folded solar cell sheet (11), and the second temperature inductor (23) is provided with a cell cover.

7. The detachable solar charging device according to anyone of claims 1 to 6, wherein the solar electrical-generating assembly (1) has two ends that are bendable, such that a card slot for accommodating the energy storage unit (2) is formed between the two ends of the solar electrical-generating assembly (1).

8. The detachable solar charging device according to anyone of claims 1 to 7, wherein the energy storage unit (2) comprises a plurality of energy storage cell modules that are detachably connected to one another.

9. The detachable solar charging device according to anyone of claims 1 to 8, wherein the energy storage unit (2) is provided with a rail socket, the solar electrical-generating assembly (1) is provided with a convex plug which is matched with the rail socket.

10. The detachable solar charging device according to anyone of claims 1 to 9, wherein the detachable solar charging device further comprises a controller integrated in an interior of the energy storage unit (2).

11. A detachable solar charging device, comprising:
a solar electrical-generating assembly (1) that is provided with an output port (4) and an electrical connection interface (10); and
an energy storage unit (2) that is provided with an output port (4) and an electrical connection joint (20),
wherein the electrical connection joint (20) is detachably connected with the electrical connection interface (10).

12. The detachable solar charging device according to claim 11, wherein the detachable solar charging device further comprises:
a display unit (3) that is provided on the energy storage unit (2) and is electrically connected with the energy storage unit (2).

13. The detachable solar charging device according to claim 11 or 12, wherein the detachable solar charging device further comprises:
a first temperature inductor (21) configured to be attached to the energy storage unit (2);
a second temperature inductor (22) for detecting an environment temperature;
the first temperature inductor (21) and the second temperature inductor (22) are connected with the display unit (3).

14. The detachable solar charging device according to anyone of claims 11 to 13, wherein the solar electrical-generating assembly (1) comprises a plurality of solar cell sheet (11) connected in series and folded one to another.

15. A detachable solar charging device, comprising:
a solar electrical-generating assembly (1) that is provided with an output port (4); and
an energy storage unit (2) that is provided with an output port (4), and is selectively and electrically connected with the solar electrical-generating assembly (1),
wherein a physical connection between the solar electrical-generating assembly (1) and the energy storage unit (2) is a detachable connection.
